(19)

Europäisches
Patentamt
European
Patent Office
Office européen
des brevets

(11) **EP 2 958 099 A1**

(12) **EUROPEAN PATENT APPLICATION**
published in accordance with Art. 153(4) EPC

(43) Date of publication:
**23.12.2015 Bulletin 2015/52**

(21) Application number: **14751174.5**

(22) Date of filing: **23.01.2014**

(51) Int Cl.:
*G09F 19/00* (2006.01)     *B64F 1/315* (2006.01)
*H05B 33/26* (2006.01)

(86) International application number:
**PCT/KR2014/000670**

(87) International publication number:
**WO 2014/126347 (21.08.2014 Gazette 2014/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.02.2013 KR 20130016370**

(71) Applicants:
• **G-Smatt Co., Ltd.
Pyeongtaek-si, Gyeonggi-do 451-832 (KR)**

• **Jung, Ji Hyun
Suwon-si, Gyeonggi-do 440-730 (KR)**

(72) Inventors:
• **JUNG, Ji Hyun
Suwon-si
Gyeonggi-do 440-730 (KR)**
• **LEE, Ho Joon
Seoul 138-911 (KR)**

(74) Representative: **Gulde & Partner
Patent- und Rechtsanwaltskanzlei mbB
Wallstraße 58/59
10179 Berlin (DE)**

(54) **BOARDING BRIDGE PROVIDED WITH TRANSPARENT ELECTRIC BULLETIN BOARD**

(57)     The present invention relates to a boarding bridge provided with a transparent electric bulletin board, and more specifically, a transparent electric bulletin board arranged in a boarding bridge includes a transparent electrode of which the width and the length of the pattern are adjusted according to the surface resistance so as to supply a uniform drive voltage to light-emitting elements, thus making the light-emitting elements emit a light with a uniform intensity.

FIG. 1

EP 2 958 099 A1

## Description

### Technical Field

The present invention relates, in general, to a boarding bridge having a transparent electronic display board and, more particularly, to a boarding bridge which forms a passage allowing passengers to move from an airport platform to an airplane and includes a transparent electronic display board installed on the ceiling or sidewall of the boarding bridge, wherein the widths and lengths of connection patterns of the transparent electronic display board are adjusted such that light-emitting elements can emit light with uniform intensity.

### Background Art

Generally, provided in airports are boarding bridges which connect an airport terminal to a door of an airplane so as to enable passengers to easily board the airplane. Functioning as a passenger-moving passage between an airport platform and an airplane, such a boarding bridge is controlled by a remote control system, such as the system for remotely controlling a boarding bridge proposed in Korean Patent Unexamined Publication No. 1999-027983.

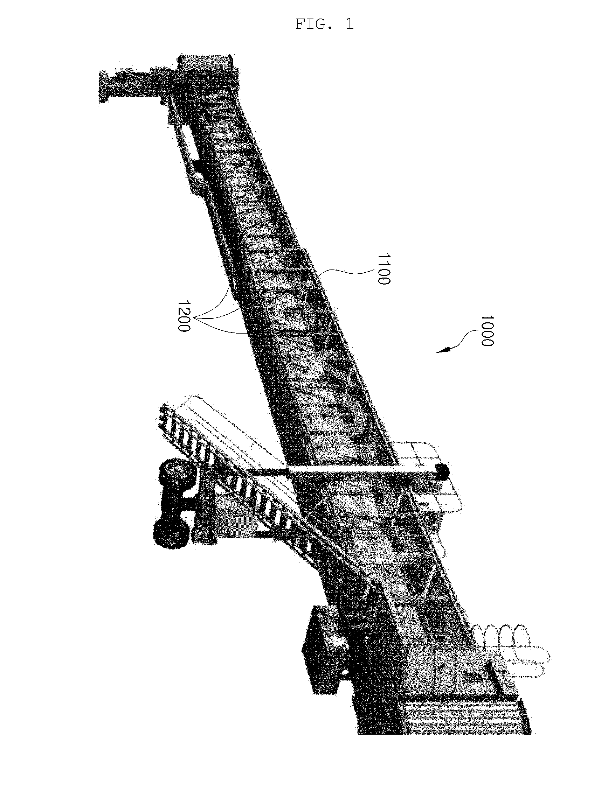

The conventional boarding bridge 1000 of No. 1999-027983 includes a bridge body 1100, which functions as a moving passage. As shown in FIG. 1, a transparent electronic display board 1200 is installed on the ceiling and/or sidewall of the bridge body 1000. The transparent electronic display board 1200 can display various text or symbols.

The transparent electronic display board 1200 that is installed in the conventional boarding bridge 1000 includes a plurality of light-emitting elements which are attached to transparent electrodes and selectively emit light under the control of a controller so that text, images, or video can be displayed on the transparent electrodes.

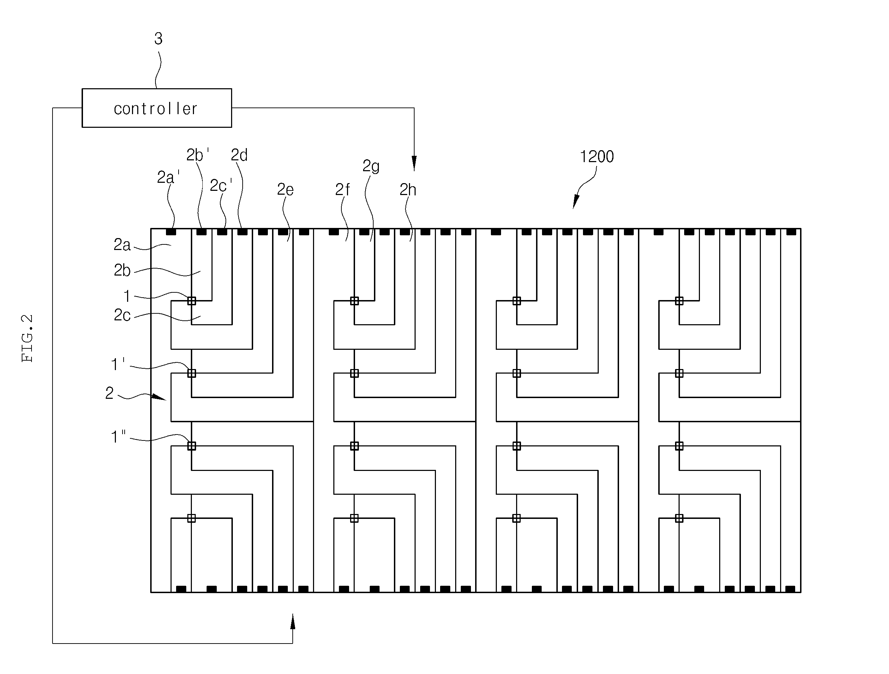

The transparent electronic display board 1200 is configured such that the light-emitting elements are connected to the transparent electrodes. Typically, two-, three-, or four-electrode light-emitting elements are selectively used as the light-emitting elements. For example, a transparent electronic display board using four-electrode light-emitting elements is illustrated in FIG. 2.

FIG. 2 is a view illustrating the connection patterns of a transparent electronic display board installed in a bridge body of the conventional boarding bridge.

Referring to FIG. 2, the transparent electronic display board 1200 that is installed on the ceiling and/or sidewall of the bridge body 1100 functioning as a moving passage in the conventional boarding bridge 1000 includes a plurality of light-emitting elements 1, connection patterns 2a through 2d and 2e through 2h, and conductive tape 2a' through 2d'. The light-emitting elements 1 are adhered, using transparent resin, between transparent electrodes 2 that face each other. The connection patterns 2a through 2d and 2e through 2h are applied to the transparent electrodes 2 and are connected to corresponding electrodes of the light-emitting elements 1, 1', and 1" to supply power to the light-emitting elements. The conductive tape 2a' through 2d' supplies power to the connection patterns 2a through 2d of the transparent electrodes.

Each light-emitting element 1, 1', 1" comprises a four-electrode light-emitting element 1, 1', 1". In detail, the light-emitting element 1, 1', 1" includes a single cathode electrode and three anode electrodes that are respectively connected to the connection patterns 2a through 2d extending from the transparent conductive tape 2a' through 2d'. Each light-emitting element 1, 1', 1" comprises a plurality of light-emitting elements which are aligned in the vertical direction. Thus, the light-emitting elements 1, 1', and 1" form a plurality of rows.

The connection patterns 2a through 2d extend from the transparent conductive tape 2a' through 2d' and are connected to the anode electrodes and the cathode electrode of the corresponding four-electrode light emitting elements 1. The transparent electrodes 2a through 2d are separated and insulated from each other such that they do not come into contact with each other. The connection patterns 2a through 2d are separated and insulated from each other such that they do not come into contact with each other.

Furthermore, the connection patterns 2a through 2d are configured such that they successively extend to the light emitting elements 1, 1', and 1" aligned with each other on the central portion of the transparent electrode. That is, the connection patterns 2a through 2d include a first connection pattern 2a which is connected to the cathode electrode to function as a ground terminal, and second through fourth transparent electrodes 2b through 2d which are connected to the respective anode electrodes. The fifth through seventh connection patterns 2e through 2g connected to the corresponding anode electrodes are successively provided next to the fourth connection pattern 2d. Another first connection pattern 2a connected to the cathode electrode is provided next to the seventh connection pattern.

However, in the transparent electronic display board 1200 installed on the bridge body 1100 of the conventional boarding bridge 1000, the number of connection patterns that are connected to the cathode electrodes of the light-emitting elements and function as ground terminals must be changed depending on the number of light-emitting elements that are arranged in the vertical or horizontal direction. Therefore, the number of manufacturing processes is increased, whereby production costs are increased, and productivity is reduced.

Furthermore, in the transparent electronic display board 1200 installed on the bridge body 1100 of the conventional boarding bridge 1000, the lengths to which the connection patterns 2a through 2d connected to the respective electrodes of the light-emitting elements 1, 1', and 1" extend are different from each other depending on the positions at which the light-emitting elements 1, 1', and 1" are fixed in place. For instance, the connection patterns that are respectively connected to the first through third light-emitting elements 1 through 1" have different lengths but have the same width.

In the transparent electronic display board 1200 installed on the bridge body 1100 of the conventional boarding bridge 1000, each transparent electrode itself has a sheet resistance. The amount of applied voltage that is lost changes depending on the length, width, and resistance per unit area of the connection patterns, which are formed on the transparent electrodes by etching and are connected to the respective electrodes of the light-emitting elements. Therefore, in the transparent electronic display board installed on the conventional boarding bridge, the intensity of light is not made uniform between the light-emitting element that is connected to the longest connection pattern and the light-emitting element that is connected to the shortest connection pattern. Thus, the quality of the output image or video is not satisfactory.

**Disclosure**

**Technical Problem**

Accordingly, the present invention has been made keeping in mind the above problems occurring in the prior art, and an object of the present invention is to provide a boarding bridge in which a transparent electronic display board is installed in a bridge body functioning as a passenger moving passage, wherein connection patterns, which are installed in the transparent electronic display board to supply power to light-emitting elements, have different widths depending on the sheet resistances and lengths of transparent electrodes, whereby the light-emitting elements can uniformly output light.

**Technical Solution**

In order to accomplish the above object, the present invention includes the following embodiments.

According to a first embodiment, a boarding bridge having a transparent electronic display board includes: a bridge body configured to form a moving passage connecting an airport terminal to an airplane and enabling a passenger to board the airplane; and a transparent electronic display board installed on at least one selected from among a ceiling and sidewalls of the bridge body, the transparent electronic display board including a plurality of light-emitting elements selected from among two- through four-electrode light-emitting elements. The transparent electronic display board includes: one or more light-emitting elements fixed on at least one surface of transparent plates, the transparent plates being spaced apart from each other and adhered to each other by transparent resin charged into a space between the transparent plates, each of the light-emitting elements configured to emit light using power applied thereto; transparent electrodes formed by conductive material applied to the transparent plates, the transparent electrodes applying power to the light-emitting elements; and connection patterns formed by etching on the transparent electrodes, the connection patterns extending different lengths and connected to respective electrodes of the light-emitting elements so that electrical signals are transmitted to the light-emitting elements. The widths of the connection patterns are increased as the lengths of the connection patterns connected to the light-emitting elements are increased.

According to a second embodiment, the width of each of the connection patterns may be calculated from Equations 1 and 2,

(Equation 1)

$$L \ (mm) \ / \ W \ (mm) \ \times \ sheet \ resistance \ (\Omega) \ of \ transparent$$
$$electrode = resistance \ (\Omega) \ of \ etched \ area$$

(Equation 2)

$$rated \ voltage \ (V) \ / \ resistance \ (k\Omega) \ of \ etched \ area = I \ (mA)$$

where, L denotes the length of the connection pattern, W denotes the width of the connection pattern, the sheet resistance of the transparent electrode refers to a sheet resistance of the transparent electrode itself, the rated voltage is a voltage applied to the transparent electronic display board, I denotes a current applied from the connection pattern to the light-emitting element, and the resistance of the etched area denotes a resistance per unit area of the connection pattern formed by etching on the transparent electrode.

According to a third embodiment, the light-emitting element may include: one or more anode electrodes and a cathode electrode that are connected to the respective connection patterns. The connection patterns may include: one or more connection patterns formed by etching on the transparent electrodes and connected to the respective anode electrodes; and a cathode connection pattern connected in common to cathode electrodes formed on the respective light-emitting elements.

According to a fourth embodiment, in each of the transparent electronic display boards, the cathode connection pattern and the connection patterns may respectively comprise connection terminals successively extending from at least one of an upper, lower, left and right edges of the transparent plates, the connection terminals being connected to transparent conductive tape. Of the connection terminals, the connection terminal of the cathode connection electrode may be disposed at an uppermost position, and the connection terminals of the connection patterns may be successively disposed below the connection terminal of the cathode connection pattern.

According to a fifth embodiment, the connection patterns may be respectively connected to the anode electrodes of each of the light-emitting elements, wherein at least one of the connection patterns may be spaced apart from another of the connection patterns by the cathode connection pattern disposed therebetween.

According to a sixth embodiment, the light-emitting elements may be arranged in a horizontal or vertical direction, wherein for each of the light-emitting elements, a number of connection patterns may be equal to a number of anode electrodes of the light-emitting element.

**Advantageous Effects**

In a transparent electronic display board installed on at least one of the ceiling and the sidewalls of the boarding bridge, the loss of power can be compensated for by adjusting the sheet resistance of a transparent electrode and the lengths of connection patterns. Thereby, light-emitting elements can uniformly output light, thus making it possible to realize precise high-quality video.

**Description of Drawings**

FIG. 1 is a perspective view illustrating a typical boarding bridge;
FIG. 2 is a plan view illustrating a transparent electronic display board installed in a bridge body of a conventional boarding bridge;
FIGS. 3 and 4 are views showing a transparent electronic display board of a boarding bridge according to the present invention;
FIG. 5 is a view showing an enlargement of a light-emitting element of the transparent electronic display board of the boarding bridge according to the present invention;
FIG. 6 is a view showing a first comparative example of the transparent electronic display board of the boarding bridge according to the present invention;
FIG. 7 is a view showing a first experimental example of the transparent electronic display board of the boarding bridge according to the present invention;
FIG. 8 is a view showing a second comparative example of the transparent electronic display board of the boarding bridge according to the present invention; and
FIG. 9 is a view showing a second experimental example of the transparent electronic display board of the boarding bridge according to the present invention.

**Best Mode**

The present invention provides a boarding bridge which connects an airport platform to an airport to form a passage through which passengers can move, wherein a transparent electronic display board is installed on the ceiling and/or sidewall of the boarding bridge and is configured such that light-emitting elements emit light with uniform intensity. To achieve the above-mentioned purpose, the transparent electronic display board includes: a pair of transparent plates which are spaced apart from each other and bonded to each other by transparent resin charged into a space between the transparent plates; one or more light emitting elements which are fastened to any one selected from between the transparent plates and emit light using power applied thereto; and connection patterns which are connected to respective electrodes of the light-emitting elements so as to transmit electrical signals to the electrodes. In the present invention, to compensate for an increase in the loss of power in response to an increase in the length of the connection patterns, the connection patterns are configured such that the widths thereof are increased as the lengths thereof are increased.

**Mode for Invention**

Hereinafter, a preferred embodiment of a boarding bridge having a transparent electronic display board according to the present invention will be described in detail with reference to the attached drawings.

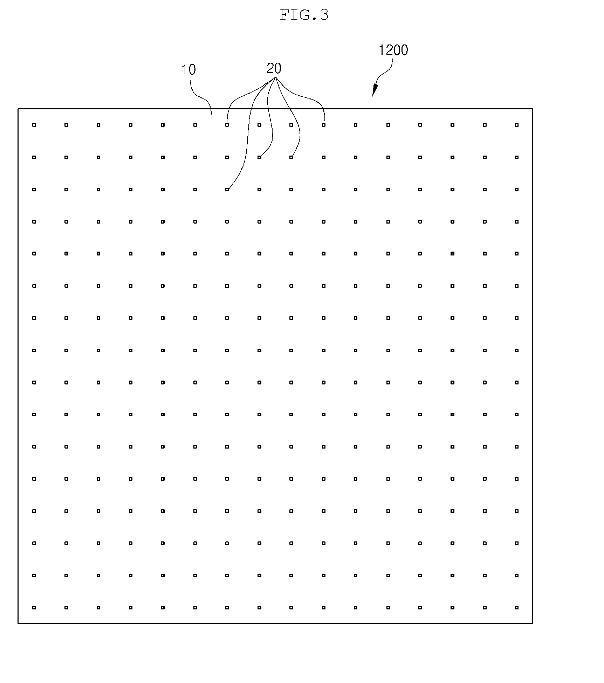

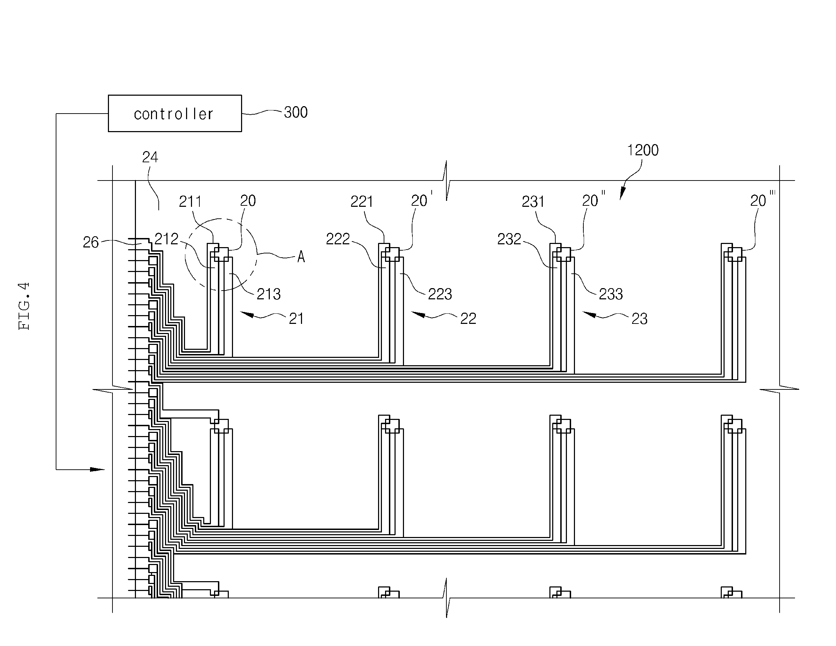

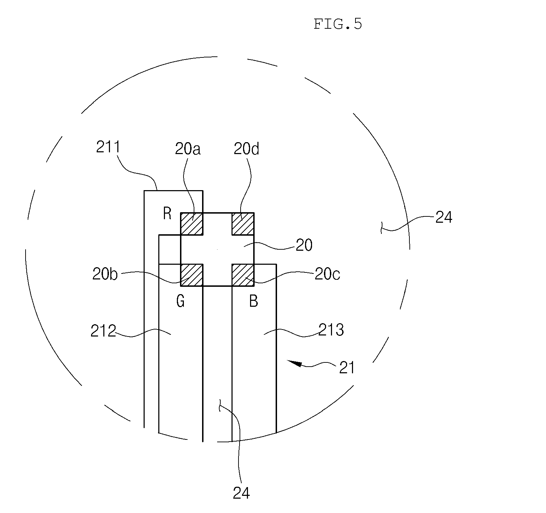

Figs. 3 and 4 are views showing a transparent electronic display board of a boarding bridge according to the present invention. FIG. 5 is a view showing an enlargement of a light-emitting element of the transparent electronic display board of the boarding bridge according to the present invention.

The same reference numerals as those of FIG. 1 will be used to designate the boarding bridge, the bridge body, and a transparent electronic display board.

Referring to FIGS. 3 through 5, the boarding bridge 1000 according to the present invention connects an airport terminal to an airplane so as to enable passengers to board the airplane. The boarding bridge 1000 includes a bridge body 1100 which forms a moving passage to allow the passengers to move between the airport terminal and the airplane, and a transparent electronic display board 1200 which is installed on at least one of the ceiling and the sidewalls of the bridge body 1100 and includes a plurality of light-emitting elements selected from among two- through four-electrode light-emitting elements.

The transparent electronic display board 1200 includes a pair of transparent plates 10, transparent electrodes 21, a plurality of light-emitting elements 20, 20', 20", and 20"', a controller 30, and a transparent-electrode conductive tape 25. The transparent plates 10 are spaced apart from each other and are adhered to each other by transparent resin. The transparent electrodes 21 through 24 are made of conductive material and are provided on either of the transparent plates 10 so as to conduct electricity. The light-emitting elements 20, 20', 20", 20"' are fixed on either side of the transparent plates 10 and emit light by means of power applied thereto from the transparent electrodes 21 through 24. The controller 30 controls the turning on or off of the light-emitting elements 20. Power is supplied to the transparent electrodes 21 through 24 through the transparent-electrode conductive tape 25.

In this embodiment, the two transparent plates 10 are disposed facing each other and are adhered to each other by transparent resin charged into the space between the two transparent plates 10. Each transparent plate 10 may be made of any one selected from among transparent glass, acryl and polycarbonate. The coupling of the light-emitting elements 20 to the transparent plate 10 can be embodied by a well-known technique, and thus further explanation thereof will be omitted.

Each light-emitting element 20 is a light source, which emits light in response to the supply of power. The multiple light-emitting elements 20 are fixed, by conductive resin (not shown), on the respective transparent electrodes 21, 22, and 23, which are formed on the surface of either of the two transparent plates 10. The upper portion of the light-emitting element 20 is protected by transparent resin and is adhered to the corresponding transparent plate. Each light-emitting element 20 has anode electrodes 20a through 20c and a cathode electrode 20d. Positive power is input into or output from the anode electrodes 20a, 20b and 20c. Negative power is input into or output from the cathode electrode 20d. Furthermore, each light-emitting element 20 may comprise any one of a two-electrode light-emitting element having one anode electrode and one cathode electrode, a three-electrode light-emitting element having two anode electrodes and one cathode electrode, and a four-electrode light-emitting element having three anode electrodes and one cathode electrode. In the present invention, the use of a four-electrode light-emitting element will be illustrated by way of example.

The transparent electrodes 21 through 24 are formed by applying any one of ITO (Indium Tin Oxide), IZO (Indium Zinc Oxide) and liquid polymer, which are conductive materials, to the surface of the transparent plate that faces the other transparent plate. The transparent electrodes 21 through 24 form one or more connection patterns 21 through 24 that are separated from each other such that they are insulated from each other and are respectively connected to the anode electrodes 20a, 20b and 20c and to the cathode electrode 20d of the light-emitting element 20. Each of the connection patterns 21 through 24 extends a predetermined length so that it can electrically transmit a signal to the light-emitting element.

The partitioned transparent electrodes 21 through 24 are partitioned from each other by the connection patterns such that the transparent electrodes 21 through 24 are respectively connected to the anode electrodes 20a, 20b, and 20c and the cathode electrode 20d of the light-emitting element 20. The transparent electrodes 21 through 24 function to transmit control signals from the controller 30 to the light-emitting element 20.

The connection patterns of the transparent electrodes 21 through 24 include connection patterns 21 through 23 which are connected to the anode electrodes 20a, 20b, and 20c of the light-emitting element, and a cathode connection pattern 24 which is connected to the cathode electrode 20d.

The number of connection patterns 21 through 23 corresponds to the number of anode electrodes 20a, 20b, and 20c of each light-emitting element 20; however, the single cathode connection pattern 24 is connected in common to the cathode electrodes 20d of a plurality of light-emitting elements 20.

For example, for a four-electrode light-emitting element 20, the connection patterns comprise a plurality of groups, each of which includes first through third connection patterns 21 through 23, which are respectively connected to first through third anode electrodes 20a, 20b, and 20c.

A first group of connection patterns includes a first connection pattern 211 connected to the first anode electrode 20a of the first light-emitting element 20, a second connection pattern 212 connected to the second anode electrode 20b, and a third connection pattern 23 connected to the third anode electrode 20c.

Likewise, a second group of connection patterns 22 and a third group of connection patterns 23 respectively include first through third connection patterns 221, 222, and 223 and first through third connection patterns 231, 232, and 233, which are respectively connected to the anode electrodes of the second and third light-emitting elements 20' and 20".

The single cathode connection pattern 24 is connected in common to the cathode electrodes 20d of the light-emitting elements 20 provided on the transparent electronic display board 1200, and the connection patterns 21 through 23 are respectively connected to the anode electrodes 20a, 20b, and 20c of each light-emitting element 20.

The multiple groups of connection patterns 21 to 23 extend from an end of a first side of the transparent plate 10 toward a second side thereof and are connected to the corresponding light-emitting elements, which are arranged in the lateral direction. The length to which each group of connection patterns 21, 22, 23 extends is changed depending on the location of the corresponding light-emitting element 20, 20', 20". Depending on the length and on the resistance per unit area, the width of each connection pattern 21, 22, 23 may be changed. The reason for this is to maintain the intensity of light, emitted from the light-emitting elements 20, 20', and 20" provided on the transparent electronic display board 1200, uniform. This will be described in detail later herein.

Furthermore, the transparent conductive tape 25 forms connection terminals 26 corresponding to the start points of the connection patterns 21, 22, and 23.

The connection terminals 26 to which the transparent conductive tape 25 is adhered are formed on at least one of upper, lower, left and right edges of the transparent plates 10 and thus form the start points from which the connection patterns 21 through 23 and the cathode connection pattern 24 extend.

Of the connection terminals 26, the connection terminal that is connected to the cathode connection pattern 24 is formed at the uppermost position. The connection terminals 26 of the connection patterns 211 through 233 corresponding to the groups of connection patterns 21 through 23 connected to one or more anodes are successively provided below the connection terminal of the cathode connection pattern 24.

The connection patterns 211 through 233 of the groups 21 through 23 are connected to one or more anode electrodes of the corresponding light-emitting elements 20, 20', and 201'. At least one of the connection patterns is spaced apart from the other connection patterns by the cathode connection pattern 24 disposed therebetween and is connected to the corresponding anode electrode 20a, 20b, 20c (refer to the second and third connection patterns 212 and 213 of FIG. 4).

The connection patterns 211 through 233 of the groups 21 to 23 extend from the transparent-electrode conductive tape 25 and are respectively connected to the anode electrodes 20a, 20b, and 20c of the corresponding light-emitting elements 20. The cathode connection pattern 24 corresponds to the entire area other than the areas on which the connection patterns 211 through 233 are formed.

Furthermore, in order to solve the conventional problem in which the intensities of light output from the light-emitting elements 20, 20', and 20" are not uniform because of differences in length and resistance per unit area of the connection patterns 211 through 233, the present invention is configured such that the widths of the connection patterns 211 through 233 connected to the anode electrodes of the light-emitting elements 20, 20', and 20" are successively increased depending on the sheet resistances and lengths thereof. This will be described in more detail later herein.

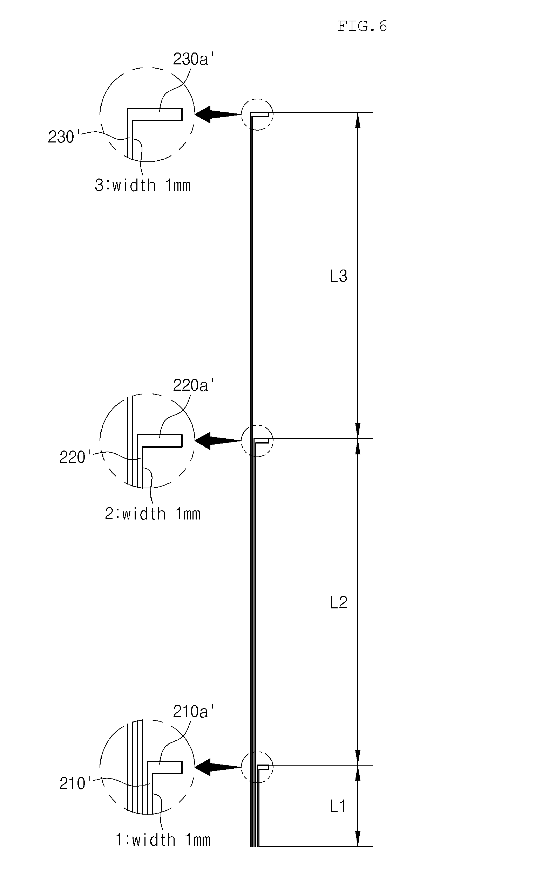

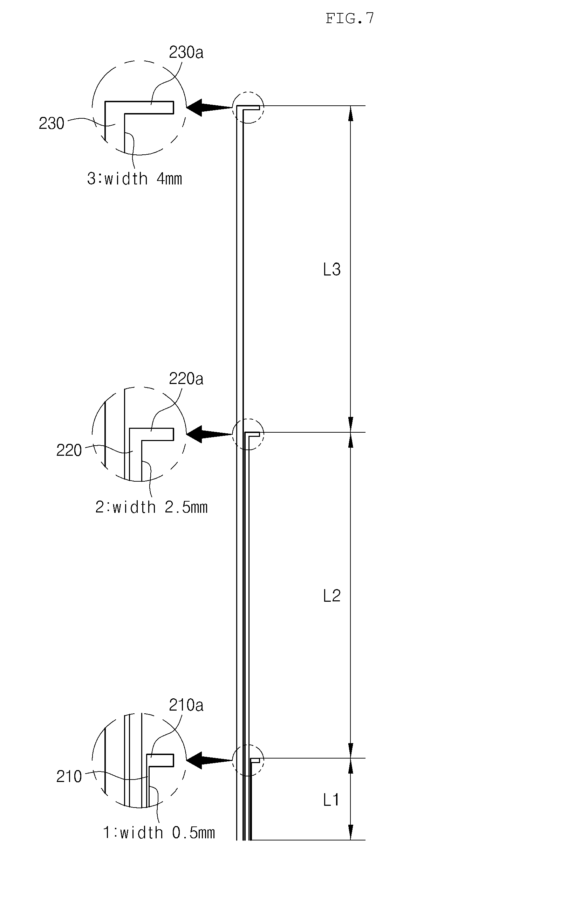

FIG. 6 is a view showing a first comparative example of the transparent electronic display board of the boarding bridge according to the present invention. FIG. 7 is a view showing a first experimental example of the transparent electronic display board of the boarding bridge 1000 according to the present invention.

The first comparative example and the first experimental example respectively include connection patterns 211 through 233 and 211' through 233' of first through third groups 210 through 230 and 210' through 230'. The connection patterns 211 through 233 or 211' through 233' are respectively connected to the first through third light-emitting elements 20, 20', and 20". The first through third groups 210 through 230 respectively refer to the groups of connection patterns 21 through 23 connected to the respective light-emitting elements. In FIGS. 6 and 7, each group is illustrated as being formed by a single pattern.

For the sake of explanation, the first through third light-emitting elements connected to the ends of the first through third connection patterns are not shown in FIGS. 6 and 7.

Each of the first experimental example and the first comparative example includes the first group 210', 210 connected to the first light-emitting element 20, the second group 220', 220 connected to the second light-emitting element 20', and the third group 230, 230' connected to the third light-emitting element 20". The groups extend different lengths L1, L2, and L3.

Further, in the first experimental example, the widths of the connection patterns 211 through 233 of the groups 210 through 230 are successively increased depending on the lengths by which the connection patterns 211 through 233 extend. In the first comparative example, the connection patterns 211' through 233' have the same width regardless of the lengths by which they extend.

The first through third groups 210 through 230 and 210' through 230' are configured such that coupling ends 210a through 210c and 210a' through 210c' are horizontally bent from the ends of the connection patterns 211 through 233 and 211' through 233' and are adhered to one or more corresponding electrodes 20a through 20c formed on the light-emitting elements 20, 20', and 20".

In the first experimental example and the first comparative example, current values applied to the light-emitting elements 20, 20', and 20" were measured on the coupling ends 210a through 210c and 210a' through 210c'. Furthermore, variation in current attributable to variation in width, which is the result of an increase in length, was measured and compared between the first experimental example and the first comparative example. The current value is calculated using the following equations 1 and 2.

(Equation 1)

$$L \text{ (mm)} / W \text{ (mm)} \times \text{sheet resistance } (\Omega) \text{ of transparent electrode} = \text{resistance } (\Omega) \text{ of etched area}$$

(Equation 2)

$$V / \text{resistance } (k\Omega) \text{ of etched area} = I \text{ (mA)}$$

Here, L denotes the length of a connection pattern. W denotes the width of the connection pattern. The sheet resistance of the transparent electrode refers to the sheet resistance of the transparent electrode itself. V denotes the rated voltage. I denotes the current value applied from the connection pattern to the corresponding light-emitting element (hereinafter, referred to as the drive current of the light-emitting element). The resistance of the etched area refers to the resistance per unit area of the connection pattern formed by etching on the transparent electrode.

The sheet resistance of the transparent electrode may be changed depending on, for example, the manufacturer, product specifications, or the like. For products mainly used in this industry, the sheet resistance is 14 Ω.

Therefore, in the present invention, the drive currents applied to the first through third light-emitting elements 20, 20', and 20" are controlled to be maintained in a predetermined range regardless of the lengths of the connection patterns, whereby the outputs of the first through third light-emitting elements 20, 20', and 20" can be made uniform.

As stated above, in the present invention, the drive currents applied to the light-emitting elements 20, 20', and 20" may be controlled by adjusting the widths of the connection patterns 211 through 233. Alternatively, depending on the application of a designer or a user, the drive currents applied to the light-emitting elements 20, 20', and 20" may be controlled by adjusting the lengths of the connection patterns. Adjusting the widths or lengths of the connection patterns to make the drive currents uniform is only one of various examples falling within the bounds of the technical spirit of the present invention.

Hereinbelow, the operation and effect realized by the technical spirit of the present invention will be explained by comparing experimental data, proving the uniformity of drive currents of different widths of the connection patterns, with drive currents of the conventional technique.

Table 1 shows drive current data measured in the first comparative example. Here, the rated voltage was 12 V, and the same products having a reference current of 5 mA were used as the first through third light-emitting elements 20, 20', and 20".

The drive currents were obtained by measuring currents applied to the coupling ends connected to the electrodes of the light-emitting elements 20, 20', and 20". The sheet resistance of the transparent electrodes was set as 14 Ω, and the rated voltage was set as 12 V. The same voltage was applied to the connection patterns.

[Table 1]

| Connection pattern No. | First etched area resistance (theoretical value, kΩ) | First drive current (mA) | Second etched area resistance (theoretical value, kΩ) | Second drive current (mA) |
|---|---|---|---|---|
| 1 | 0.76 | 15.79 | 0.71 | 13.31 |
| 2 | 3.57 | 3.36 | 3.77 | 2.77 |
| 3 | 6.39 | 1.88 | 6.85 | 1.56 |

The first drive currents are current values on the coupling ends 210a' through 230a' of the respective connection patterns, calculated by the first etched area resistances obtained from the product specifications. The second drive currents are values which were actually measured on the coupling ends 210a' through 230a' of the connection patterns of the first through third groups 210' through 230'.

With regard to the connection patterns 211' and 233' of the first through third groups 210' through 230', the connection patterns 211' through 213' of the first group 210' are the shortest, while the connection patterns 231' through 233' of the third group 230' are the longest. The connection patterns 211' and 233' are the same in width.

It was observed that, under the above-mentioned conditions, the maximum deviation in current measured on the coupling ends 210a' through 230a', which was caused by the difference in length of the connection patterns, was 12 mA.

Table 2 shows data about drive currents measured in the first experimental example. Here, the lengths L1, L2, and L3 of the connection patterns of the first experimental example are respectively the same as the lengths L1, L2, L3 of the connection patterns of the first comparative example. However, the connection patterns of the first experimental example are configured such that as the length thereof is increased, the width thereof is also increased. With regard to experimental conditions, the rated voltage was set as 12 V, and the reference current of the light-emitting elements was 5 mA. Products having the same specifications as that of the first comparative example were used.

Furthermore, the width of the connection patterns 211 through 213 of the first group 210 was 0.5 mm, the width of the connection patterns 221 through 223 of the second group 220 was 2.5 mm, and the width of the connection patterns 231 through 233 of the second group 230 was 4 mm. As such, as the lengths L1, L2, and L3 of the connection patterns were increased, the widths thereof were also increased.

[Table 2]

| Connection pattern No. | First etched area resistance (theoretical value, kΩ) | First drive current (mA) | Second etched area resistance (theoretical value, kΩ) | Second drive current (mA) |
|---|---|---|---|---|
| 1 | 1.42 | 8.45 | 1.28 | 6.80 |
| 2 | 1.44 | 8.33 | 1.28 | 6.83 |
| 3 | 1.64 | 7.32 | 1.46 | 6.00 |

Checking the drive currents given in Table 2, it can be understood that with regard to the first drive currents or the second drive currents, the maximum deviation between values measured on the coupling ends 210a and 230a of the connection patterns 211 and 213 of the first group 210 or the connection patterns 231 and 233 of the third group 230 is less than 1.2 mA.

In other words, drive currents applied to the light-emitting elements 20, 20', and 20", forming the coupling ends 210a through 230a of the connection patterns of the groups 210, 220, 230, are increased as the connection patterns are increased in width. Thus, unlike the data of Table 1, it can be understood that the loss of current resulting from the increase in length of the connection patterns 211 through 233 can be compensated for.

Furthermore, the applicant of the present invention used a transparent electronic display board 1200 with four-terminal light-emitting elements, each of which is designed such that each group includes four connection patterns, and made a comparison using a second comparative example in which connection patterns have the same width as a second experimental example, in which the widths of connection patterns are successively increased.

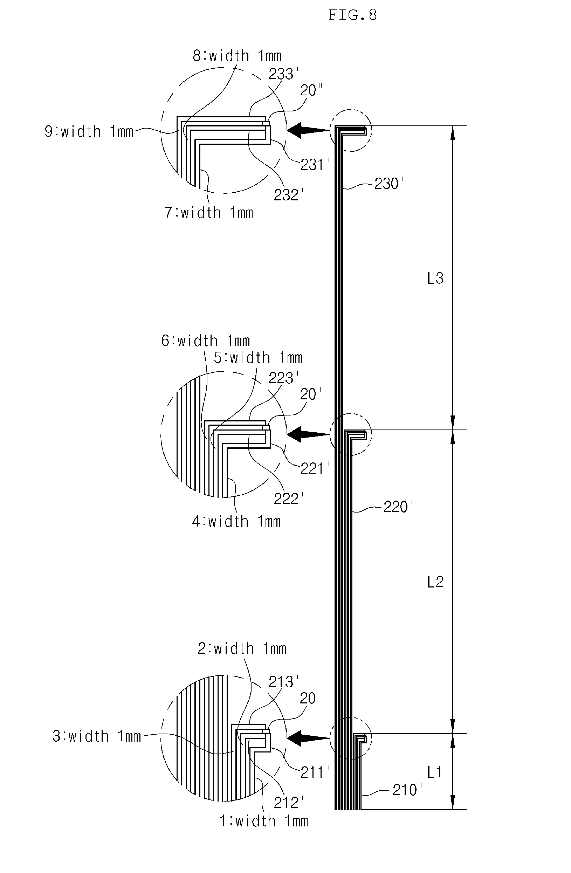

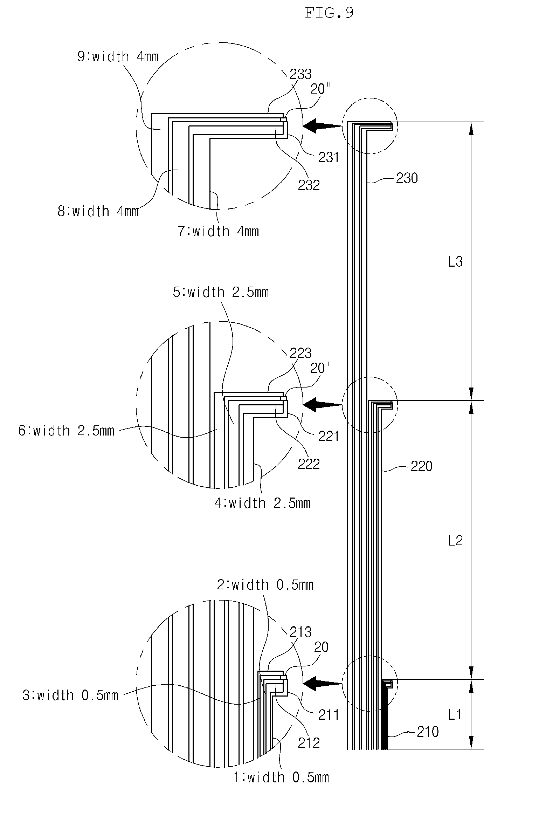

FIG. 8 is a view showing a second comparative example of the transparent electronic display board of the boarding bridge according to the present invention. FIG. 9 is a view showing a second experimental example of the transparent electronic display board of the boarding bridge according to the present invention.

Referring to FIG. 8, the second comparative example includes one or more groups 21 through 23 and one or more light-emitting elements 20, 20', and 20". The groups 21 through 23 include one or more connection patterns 211 through 233 which are formed by etching on transparent electrodes 21 through 24, which are formed by applying conductive material to one surface of a transparent plate 10. The light-emitting elements 20, 20', and 20" emit light by means of power applied from the connection patterns 211 through 233.

A light-emitting element having a four-terminal electrode is used as each light-emitting element 20, 20', 20". As stated above, the cathode electrodes of the light-emitting elements are connected in common to the cathode connection pattern 24.

The groups 210' through 230' including the one or more connection patterns 211' through 233' are successively increased in length. The groups 210' through 230' include first through third connection patterns 211' through 233' connected to the anode electrodes of the light-emitting element 20, 20', and 20".

The connection patterns 211' through 233' of the first through third groups 210' through 230' have the same width of 1 mm and are successively increased in length from the first group 210' to the third group 230'. The first group 210' includes first through third connection patterns 211' through 213', which are connected to respective electrodes of the first light-emitting element 20. The second group 220' includes fourth through sixth connection patterns 221' through 223', which are connected to respective electrodes of the second light-emitting element 20'. The third group 230' includes seventh through ninth connection patterns 231' through 233', which are connected to respective electrodes of the third light-emitting element 20". Here, the first through ninth connection patterns 211' through 233' have the same width but have different lengths depending on the group. Data measured in the second comparative example is as follows.

[Table 3]

| Connection pattern No. | First etched area resistance (theoretical value, kΩ) | First drive current (mA) | Second etched area resistance (theoretical value, kΩ) | Second drive current (mA) |
|---|---|---|---|---|
| 1 | 0.77 | 15.58 | 0.72 | 13.43 |
| 2 | 0.78 | 15.38 | 0.74 | 12.03 |
| 3 | 0.83 | 14.36 | 0.80 | 11.46 |
| 4 | 3.66 | 3.28 | 3.83 | 2.73 |
| 5 | 3.66 | 3.28 | 3.86 | 2.51 |
| 6 | 3.71 | 3.23 | 3.92 | 2.43 |
| 7 | 6.54 | 1.83 | 7.02 | 1.48 |
| 8 | 6.55 | 1.83 | 7.01 | 1.36 |
| 9 | 6.60 | 1.82 | 7.06 | 1.37 |

The rated voltage was 12 V, the reference current was 5 mA, and the sheet resistance of the transparent electrode was 14 Ω. Each drive current was measured by the connection patterns.

From Table 3, it can be understood that as the length of the pattern is increased, the etched area resistance is increased by the maximum of 5.9 kΩ, and the maximum deviation of the drive current is 13.76 mA.

That is, in the second comparative example, depending on the length of the connection pattern, the intensity of light output from the light-emitting elements 20, 20', and 20" varies. Thus, the overall light output from the transparent electronic display board 1200 is not uniform, so that it is difficult to realize a video in great detailed.

The applicant of the present invention tested the second experimental example of FIG. 9 under the same conditions to compare it with the test result of the second comparative example. In the second experimental example, the lengths of the connection patterns and the rated voltage were the same as those of the second comparative example. However, unlike the second comparative example, the connection patterns of the first through third groups 210 through 230 were successively increased in width. Under these conditions, the drive current was measured, and the result is shown in the following Table 4.

[Table 4]

| Connection pattern No. | First etched area resistance (theoretical value, kΩ) | First drive current (mA) | Second etched area resistance (theoretical value, kΩ) | Second drive current (mA) |
|---|---|---|---|---|
| 1 | 1.39 | 8.63 | 1.22 | 6.92 |

(continued)

| Connection pattern No. | First etched area resistance (theoretical value, kΩ) | First drive current (mA) | Second etched area resistance (theoretical value, kΩ) | Second drive current (mA) |
|---|---|---|---|---|
| 2 | 1.44 | 8.33 | 1.31 | 5.86 |
| 3 | 1.52 | 7.89 | 1.37 | 5.52 |
| 4 | 1.56 | 7.70 | 1.36 | 6.41 |
| 5 | 1.55 | 7.74 | 1.37 | 5.76 |
| 6 | 1.61 | 7.45 | 1.42 | 5.49 |
| 7 | 1.87 | 6.42 | 1.76 | 5.16 |
| 8 | 1.90 | 6.31 | 1.69 | 4.56 |
| 9 | 1.98 | 6.06 | 1.58 | 4.49 |

In the second experimental example, the width of the connection patterns 211 through 213 of the first group 210 was 0.5 mm, the width of the connection patterns 221 through 223 of the second group 220 was 2.5 mm, and the width of the connection patterns 231 through 233 of the second group 230 was 4 mm. The lengths L1, L2, and L3 of the connection patterns were the same as those of the second comparative example, the sheet resistance of the transparent electrodes was 14 Ω, and the rated voltage was 12 V.

The first drive currents of Table 4, which are theoretical current values obtained from the product specifications, were calculated from Equations 1 and 2. The second drive currents are actually measured data. The widths of the connection patterns 211 through 233 of the first through third groups 210 through 230 were calculated from Equations 1 and 2.

The maximum deviation of the first or second drive currents was 2.53 mA, which was markedly less than 13.76 mA of the second comparative example. That is, in the present invention, the deviation of the light outputs of the light-emitting elements 20, 20', and 20" is comparatively small regardless of the lengths of the connection patterns 211 through 233. Therefore, the entire transparent electronic display board 1200 can emit light with uniform intensity.

As described above, in the transparent electronic display boards 1200 installed on the bridge body 1100 of the boarding bridge 1000 according to the present invention, the light-emitting elements can emit light with uniform light output. Therefore, the transparent electronic display boards 1200 can embody more precise and clean high-quality images or videos.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Industrial Applicability**

In the present invention, a transparent electronic display board that can output an image or video is installed on a boarding bridge, which connects an airport terminal to an airplane door so as to enable passengers to board the airplane. The transparent electronic display board can realize a high-quality image. Therefore, the present invention can be regarded as being very useful.

**Claims**

1.  A boarding bridge having a transparent electronic display board, the boarding bridge comprising:

    a bridge body configured to form a moving passage connecting an airport terminal to an airplane and enabling a passenger to board the airplane; and
    a transparent electronic display board installed on at least one selected from among a ceiling and sidewalls of the bridge body, the transparent electronic display board including a plurality of light-emitting elements selected from among two- through four-electrode light-emitting elements,
    wherein the transparent electronic display board comprises:

one or more light-emitting elements fixed on at least one surface of transparent plates, the transparent plates being spaced apart from each other and adhered to each other by transparent resin charged into a space between the transparent plates, each of the light-emitting elements configured to emit light using power applied thereto;

transparent electrodes formed by conductive material applied to the transparent plates, the transparent electrodes applying power to the light-emitting elements; and

connection patterns formed by etching on the transparent electrodes, the connection patterns extending different lengths and connected to respective electrodes of the light-emitting elements so that electrical signals are transmitted to the light-emitting elements,

wherein widths of the connection patterns are increased as lengths of the connection patterns connected to the light-emitting elements are increased.

2. The boarding bridge of claim 1, wherein the width of each of the connection patterns is calculated from Equations 1 and 2,

(Equation 1)

L (mm) / W (mm) × sheet resistance (Ω) of transparent electrode = resistance (Ω) of etched area

(Equation 2)

rated voltage (V) / resistance (kΩ) of etched area = I (mA)

where, L denotes the length of the connection pattern, W denotes the width of the connection pattern, the sheet resistance of the transparent electrode refers to a sheet resistance of the transparent electrode itself, the rated voltage is a voltage applied to the transparent electronic display board, I denotes a current applied from the connection pattern to the light-emitting element, and the resistance of the etched area denotes a resistance per unit area of the connection pattern formed by etching on the transparent electrode.

3. The boarding bridge of claim 1, wherein the light-emitting element comprises:

one or more anode electrodes and a cathode electrode that are connected to the respective connection patterns, wherein the connection patterns comprise: one or more connection patterns formed by etching on the transparent electrodes and connected to the respective anode electrodes; and a cathode connection pattern connected in common to cathode electrodes formed on the respective light-emitting elements.

4. The boarding bridge of claim 3, wherein in each of the transparent electronic display boards,

the cathode connection pattern and the connection patterns respectively comprise connection terminals successively extending from at least one of an upper, lower, left and right edges of the transparent plates, the connection terminals being connected to transparent conductive tape,

of the connection terminals, the connection terminal of the cathode connection electrode is disposed at an uppermost position, and

the connection terminals of the connection patterns are successively disposed below the connection terminal of the cathode connection pattern.

5. The boarding bridge of claim 3, wherein the connection patterns are respectively connected to the anode electrodes of each of the light-emitting elements, wherein at least one of the connection patterns is spaced apart from another of the connection patterns by the cathode connection pattern disposed therebetween.

6. The boarding bridge of claim 3, wherein the light-emitting elements are arranged in a horizontal or vertical direction, wherein for each of the light-emitting elements, a number of connection patterns is equal to a number of anode electrodes of the light-emitting element.

FIG. 1

1100

1200

1000

FIG.2

FIG.3

FIG.4

FIG.5

FIG.6

230a'

230'

3:width 1mm

L3

220a'

220'

2:width 1mm

L2

210a'

210'

1:width 1mm

L1

FIG.7

230a

230

3:width 4mm

220a

220

2:width 2.5mm

210a

210

1:width 0.5mm

L3

L2

L1

FIG.8

FIG.9

9:width 4mm
233
20"
8:width 4mm
7:width 4mm
231
232
230

5:width 2.5mm
223
20'
6:width 2.5mm
221
222
4:width 2.5mm
220

2:width 0.5mm
213
20
3:width 0.5mm
211
212
1:width 0.5mm
210

L3

L2

L1

## INTERNATIONAL SEARCH REPORT

| International application No. |
| --- |
| **PCT/KR2014/000670** |

**A. CLASSIFICATION OF SUBJECT MATTER**

*G09F 19/00(2006.01)i, B64F 1/315(2006.01)i, H05B 33/26(2006.01)i*

According to International Patent Classification (IPC) or to both national classification and IPC

**B. FIELDS SEARCHED**

Minimum documentation searched (classification system followed by classification symbols)
G09F 19/00; F21V 19/00; G09F 9/33; G09F 19/22; H01L 33/48; F21Y 101/02; B64F 1/315; H05B 33/26

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: transparent, electric light, light emission, electrode

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-1188747 B1 (G-SMATT CO.,LTD) 10 October 2012 (See abstract, paragraphs [0007], [0020], claims 1-7 and figures 3-6) | 1,3-6 |
| Y | JP 2011-129646 A (PANASONIC CORP) 30 June 2011 (See abstract, paragraph [0042] and figure 14) | 1,3-6 |
| A | JP 2011-113731 A (PANASONIC CORP) 09 June 2011 (See abstract, paragraph [0072] and figures 1-11) | 1-6 |
| A | JP 11-249612A (EXPRESSO DEUTSCHE TRANSPORTGERAETE GMBH) 17 September 1999 (See abstract, claim 1 and figures 1-4) | 1-6 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 MAY 2014 (27.05.2014) | **27 MAY 2014 (27.05.2014)** |

| Name and mailing address of the ISA/KR | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/000670**

| Patent document cited in search report | Publication date | Patent family member | Publication date |
|---|---|---|---|
| KR 10-1188747 B1 | 10/10/2012 | WO 2014-014169 A1 | 23/01/2014 |
| JP 2011-129646 A | 30/06/2011 | NONE | |
| JP 2011-113731 A | 09/06/2011 | JP 5368277 B2 | 18/12/2013 |
| JP 11-249612A | 17/09/1999 | CA 2256217 C | 09/01/2007 |
| | | DE 29722340 U1 | 15/04/1999 |
| | | DK 0924679 T3 | 11/10/2004 |
| | | EP 0924679 A2 | 23/06/1999 |
| | | EP 0924679 A3 | 26/04/2000 |
| | | EP 0924679 B1 | 30/06/2004 |
| | | SG 71180 A1 | 21/03/2000 |
| | | US 6275201 B1 | 14/08/2001 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1999027983